# EUROPEAN PATENT SPECIFICATION

(11) **EP 1 077 908 B1**
(45) Date of publication and mention of the grant of the patent: **09.10.2002**
(21) Application number: 99921005.7
(22) Date of filing: 10.05.1999
(51) Int. Cl.: C04B 28/26, C04B 14/20

(54) **HEAT RESISTANT PRODUCT AND METHOD**
HITZEBESTÄNDIGER GEGENSTAND UND VERFAHREN
PRODUIT RESISTANT A LA CHALEUR ET PROCEDE

(30) Priority: 15.05.1998 GB 9810551; 10.09.1998 GB 9819753
(43) Date of publication of application: 28.02.2001
(73) Proprietor: THE WELDING INSTITUTE, Great Abington, Cambridge CB1 6AL (GB)
(72) Inventor: BURLING, Paul, Maurice, Sawston Cambridge CB2 4DU (GB)
(74) Representative: Hucker, Charlotte Jane
(86) International application number: GB9901467
(87) International publication number: WO99059935

(56) References cited:
- WO-A-97/02414
- DE-A- 19 515 779
- DE-C- 4 231 838
- DE-U- 29 616 564
- FR-A- 2 336 524
- GB-A- 613 090
- GB-A- 627 532
- GB-A- 693 168
- US-A- 3 015 626
- US-A- 3 203 813
- US-A- 5 085 897

## Description

The invention relates to a heat resistant product and a method for producing the product.

There are many applications where heat insulation and in particular fire resistance is required. Important examples include fire walls and doors for buildings and ships, ceilings, walls and internal panels of trains and other vehicles and heat shields for high performance aircraft, for example leading edges of wings, noses and cones.

Various coating materials and the like have been proposed in the past to promote heat insulation in these applications but these have been found to be inefficient and/or non-cost effective and there is a need to provide a much cheaper but reliable heat insulating product.

ZA-A-9701233 (corresponding to WO-A-9730951) describes the production of a non-combustible moulded part which comprises blowing vermiculite granules at elevated temperature and then mixing with a binder. In that case, the binder must be phosphorus containing which is undesirable for applications with which the invention is concerned.

US-A-3015626 describes a thermal and acoustical insulating material comprising exfoliated vermiculite, and optionally perlite, dispersed in a binder, which may be a silicate binder.

In accordance with a first aspect of the present invention, a method of manufacturing a heat resistant product comprises (i) coating vermiculite granules with a ceramic binder, and curing/drying the binder to form precoated vermiculite granules; and (ii) coating the precoated vermiculite granules with a ceramic binder, and curing/drying the binder, wherein between 35% and 95% of the dry weight of the product is vermiculite having a particle size such that more than 60% of the vermiculite does not pass through a 1mm sieve.

In accordance with a second aspect of the present invention, a heat resistant product obtainable by the above-described method comprises a ceramic binder and vermiculite, wherein between 35% and 95% of the dry weight of the product is vermiculite having a particle size such that more than 60% of the vermiculite does not pass through a 1mm sieve.

We have found that a very cost effective product can be obtained by utilizing a mixture of vermiculite granules and a ceramic binder. This should be contrasted with known mica sheet and panels made using paper making or other processes which are very dense products. The new product will be much less dense than this sheet material with the result that heat insulation is promoted by virtue of the trapped air. Furthermore, the resultant product is very lightweight making it much easier to handle and can be utilized in a variety of forms depending upon the application.

We have realised that a problem with the known product is that it is made using ground or sieved particles which result in too high a density. This results in a reduction in voids which include trapped air and thus a reduction in the heat resistant performance of the product. On the other hand, if the particle size is too large then a product can result in which there is an open, air path from one side of the product to the other through which heat can be conducted. By utilising particles which fall within the inventive ranges, both these problems are overcome while at the same time a relatively light weight product is produced.

We have also found that the resultant product has good mechanical strength properties and for example with densities in the range 250-300Kg/m³, flexural strengths of 0.15-0.45 MPa are achieved. Experiments have shown that the density is preferably no less than 140Kg/m³ to achieve acceptable flexural strength in a self-supporting product. Furthermore, the greater the proportion of the vermiculite, the more light weight the product.

Preferably, 50%-90% of the dry weight of the product is vermiculite having a particle size such that more than 60% of the vermiculite does not pass through a 1mm sieve.

In one form, the product is substantially rigid and can be handled rather like wood or the like so that it can be cut to required shapes. The product is relatively brittle and so typically will be sandwiched between load supporting sheets which are adhered to the product. These load supporting sheets can comprise fibre reinforced material sheets, steel or any other material enabling the panel to function as a structural or semi-structural component.

In other applications, the product is adhered to the surface of an article. Thus, a substantially rigid product could be produced which is then adhered to the article or more conveniently the product is formed in-situ on the article, for example by moulding, or by spraying onto the article.

An important application for the product is with known sandwich structures. These typically comprise of a core material such as foamed metals, plastics, wood, endgrain balsa or a cellular honeycomb of metal, plastic or composite materials sandwiched between planar members such as phenolic glass laminates or any other suitable material. These sandwich structures have considerable importance within structural engineering and are used extensively in aerospace and other industries since they provide key benefits over conventional materials including very low weight, high stiffness, durability and production cost savings. However, such sandwich structures do not generally operate above 170°C. If a product according to the invention is adhered to the surface, the structure can be used at higher temperatures. If the product is included as the core, the thermal conductivity and fire resistance is improved.

The product can be produced in a number of different thicknesses and consistency and can adhere to most surfaces including metal, wood and composites. The product can be moulded around complicated shapes and can be produced in very thin layers which are flexible. Glass fibre, woven glass fibre or other fibrous materials can be used to reinforce the product if required. This is dependent on the thickness of the product and the binder used.

In principle, any ceramic binder could be used, such a binder typically comprising an alkali silicate or blend with a filler such as alumina, magnesia, silica or other ceramic. The preferred binder comprises the adhesive part of a two part binder such as a blend based on sodium silicate. Commercial examples of such a binder are Al/CS manufactured by Fortafix Limited, and Aremco 571. The Al/CS binder comprises a first part of a sodium silicate blend and a second part of an alumina filler. We have found that a very good product is obtained by using the adhesive part only (without the filler) or possibly by replacing the filler with powdered vermiculite.

The step of drying the mixture could be carried out by heating or any other drying method including vacuum drying, optionally assisted by the use of microwave radiation.

The amount of vermiculite used will depend upon the desired density and strength of the product and the manner in which it is used. If the product is supported between sheets then up to 95% of the dry weight of the product may be vermiculite. Lower proportions would be more suitable in other applications, a preferred range being 50%-90%.

The product is made using a two step method, step 1 comprising coating the particles with a ceramic binder, and curing/drying the binder, and step 2 comprising coating the precoated particles with a ceramic binder (possibly different from that used in step 1) and curing/drying the binder with or without pressure.

The drying step is conveniently carried out by heating the mixture, typically in the range 40-120°C. However, other forms of drying such as vacuum drying which do not require the generation of heat could also be used. Typically, the mixture will be stirred to optimise the coating process. Alternatively, no stirring could be used which will mean that the particles and binder will generate a consolidated mass which can then be broken up to generate individual, coated particles.

As with step 1, the drying part of step 2 could be carried out by heating the mixture or by some other method which does not involve heat such as vacuum drying.

The resultant product will be heat resistant and so can be used for firewalls and the like that is preferably also heat insulating.

Examples of applications of the invention are set out below:
1. Fire walls and doors for buildings and ships.
2. Protecting surfaces that are near to a heat source i.e. exhaust manifolds on cars and trucks.
3. Cable industry where once asbestos materials were used.
4. Electronic motors, commutators, insulators.
5. Cabin and cargo holds for aircraft.
6. Ceilings, walls and internal panels of trains.
7. Heat shields on high performance aircraft i.e. leading edges of wings, noses, and cones.
8. Protection from solar or other radiant heating.

Tests have shown that the heat insulating product according to the invention has a number of important properties:
1. Thermal properties, the product can withstand heat up to temperature of 1000°C.
2. Resists fire without burning.
3. Low heat conductivity which is density dependent.
4. Insulating electrical properties better than 24kV/mm.
5. Permeability to microwaves.
6. Good resistance to arcing and arc erosion.
7. Vermiculite is inert to most chemicals.
8. Mechanical properties are very good in particular compression resistance.
9. Good tensile and bending strength.

These properties together with density and mechanical strength, can be varied depending upon the particular mixture of vermiculite and binder and processing method which is used and these can be chosen depending upon the application.

Some examples of heat resistant products and methods for their manufacture according to the invention will now be described with reference to the accompanying drawings, in which:-
Figure 1 is a schematic cross-section through one example of a product incorporated onto a honeycomb structure;
Figure 2 illustrates the results of a fire test on the structure shown in Figure 1;
Figure 3 is a photograph of another example of the product; and,
Figure 4 illustrates graphically the relationship between flexural strength and density for a sample having a thickness of 25mm, a span length of 120mm and a loading rate of 2mm/min.

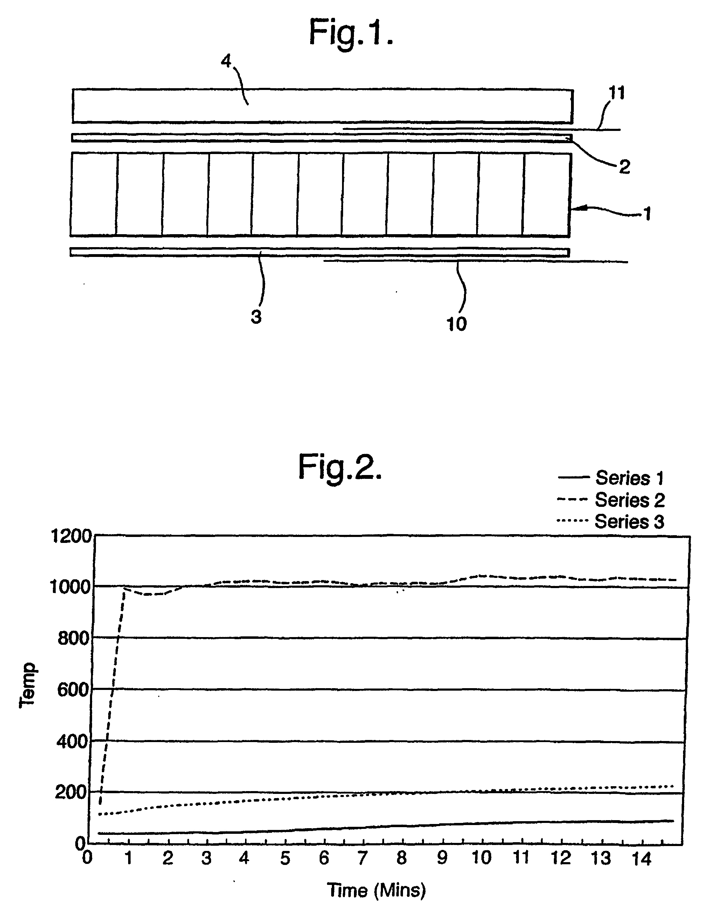

Figure 1 illustrates a honeycomb core 1 made, for example, of aluminium in a conventional manner. This core is sandwiched between a pair of phenolic skins 2,3 which are adhered to the core 1. As explained previously, this sandwich structure does not have significant fire resistance and so to improve its fire resistance, a vermiculite heat insulating layer 4 is provided on the phenolic skin 2. This was achieved in the following manner.

A conventional two part ceramic adhesive Al/CS was selected and 120 grams of the adhesive part (that is a blend of sodium silicate) was mixed with 2 grams of powdered vermiculite and 26 grams of vermiculite granules. The powdered vermiculite took the place of the conventional alumina filler which is normally used with the ceramic adhesive and is used in the same proportion as the filler.

In this example, the granules comprised exfoliated vermiculite with particle sizes such that 93% of the particles passed through an 8mm sieve, 32% through a 4mm sieve and 4% through a 2mm sieve.

The exposed surface of the phenolic skin 2 was degreased, this skin having dimensions of 150mm x 150mm x 12mm. 70 grams of an adhesive (Fortafix Al/CS)/powdered vermiculite was applied onto the clean surface of the phenolic skin or board 2 and the board was placed in a bonding jig with the adhesive surface face up.

The mixture of vermiculite granules and adhesive was applied onto the precoated surface of the phenolic skin 2 to a thickness of about 8mm. A thin layer of powdered vermiculite was then evenly spread over the exposed surface of this previously coated mixture and the resultant product was clamped over its entire area using a steel caul plate with release paper. The structure was then placed in a preheated oven for one hour at 60°C to bind the vermiculite granules into the layer 4 and adhere that layer to the phenolic skin 2. In some cases, further improved properties can be obtained by using higher temperatures.

It should be understood that the provision of a thin layer of powdered vermiculite over the surface of the layer 4 is optional as is the use of powdered vermiculite in the earlier mixing process. It was found that the replacement of the powder filler or its omission from the binder provided a significant weight saving without adversely effecting the performance as well as providing a cost saving.

The performance of the structure shown in Figure 1 was assessed by placing thermocouples onto the structure at the positions shown in Figure 1. A series 1 thermocouple 10 was placed on the surface of the phenolic skin 3, and a series 2 thermocouple 11 was placed between the phenolic skin 2 and the layer 4; and series 3 thermocouple was placed on the uncoated, external surface of the layer 4. As can be seen from Figure 2, the fire test showed that when a flame at 1000°C was placed on the exposed surface of the layer 4, the series 1 thermocouple indicated that the temperature on the opposite surface of the structure did not exceed 130°C for 15 minutes. The series 2 thermocouple indicates that the temperature between the layer 4 and the phenolic skin 2 did not exceed 220°C.

In view of the significant reduction in heat across the layer 4, conventional adhesives can be used to adhere that structure to the support surface.

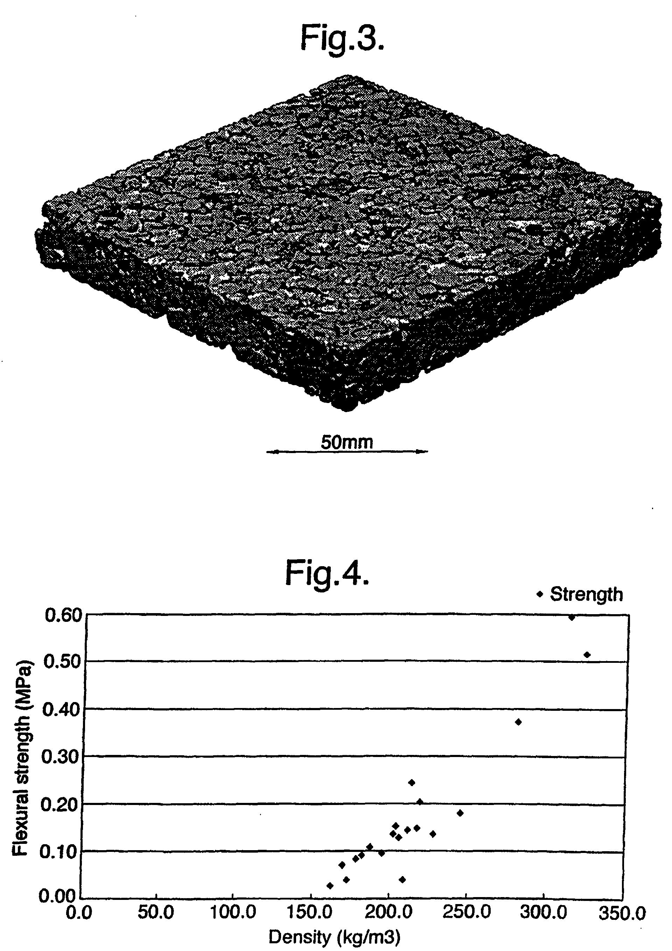

Figure 3 illustrates another form of the product which has a substantially rigid structure and is self-supporting. This can be used as the core between load bearing boards or plates, for example made of vermiculite (not shown). As can be seen in Figure 3, the product has substantial size and the granules are clearly visible, having a maximum dimension up to 15mm. The product can be handled in a similar way to wood as previously mentioned. This product has been formed by a moulding process and it will be clear that more complex shapes could also be achieved using appropriate moulds. This indicates the versatility of the invention.

The preferred method to produce a core material involves two stages.

The first stage requires vermiculite granules and a ceramic binder (in this example a blend of sodium silicate) to be mixed in a minimum ratio of 1:0.5 by weight of vermiculite to binder. This is then cured at a maximum of 120°C for a minimum of ½ hour. This produces a precoated vermiculite for use in stage two.

Stage 2 requires precoated vermiculite from stage 1 to be coated with a ceramic binder in a minimum ratio of 1:0.5 by weight of precoated vermiculite to binder. This is then cured (usually in a mould) at a maximum temperature of 100°C for a minimum of ½ hour, with the application of pressure.

This product is appropriate for use with or without adhered skins.

We have made some investigations into the variation of mechanical performance with density of samples of the product and the results are illustrated in Figure 4. As can be seen, acceptable flexural strength is achieved at relatively low densities.

We have also performed a set of flexural tests on samples of the product, both with and without aluminium skins. These tests were performed on samples of 250Kg/m³ density, 15mm thick, in accordance with the standard ASTM C-393, although a span length of 120mm was used.

Samples were tested with no skins, and with 1.5mm thick aluminium alloy skins. The results are presented below:

| | Average Flexural Strength (Mpa) |
|---|---|
| Without skins | 0.31 |
| With aluminium skins (1.5mm thick) | 5.93 |

We have also investigated the thermal conductivity of the product. This was done using a thermal imaging technique. The value obtained for a 250Kg/m³ density panel was 0.06W/m/K.

## Claims

1. A method of manufacturing a heat resistant product, the method comprising
(i) coating vermiculite granules with a ceramic binder, and curing/drying the binder to form precoated vermiculite granules; and
(ii) coating the precoated vermiculite granules with a ceramic binder, and curing/drying the binder,
wherein between 35% and 95% of the dry weight of the product is vermiculite having a particle size such that more than 60% of the vermiculite does not pass through a 1mm sieve.

2. A method according to claim 1, wherein the curing/drying steps comprise heating or vacuum drying.

3. A method according to claim 1 or claim 2, wherein the mixture of precoated vermiculite granules and binder is held in a mould or press during curing/drying in step (ii).

4. A method according to claim 1 or claim 2, wherein the mixture of precoated vermiculite granules and binder is coated onto a surface of an article prior to the curing/drying step.

5. A method according to any preceding claim, wherein 50%-90% of the dry weight of the product is vermiculite having a particle size such that more than 60% of the vermiculite does not pass through a 1mm sieve.

6. A method according to any preceding claim, wherein the vermiculite has a particle size such that more than 80% of the vermiculite does not pass through a 2mm sieve.

7. A method according to any preceding claim, wherein the binder comprises the adhesive part of a two part binder.

8. A method according to any of claims 1 to 6, wherein the binder comprises the adhesive part of a two part binder, mixed with powdered vermiculite.

9. A method according to any preceding claim, wherein the vermiculite granules have a maximum dimension up to 15mm.

10. A heat resistant product obtainable by a method according to any preceding claim.

11. A product according to claim 10, wherein the product is substantially rigid.

12. A product according to claim 10 or claim 11, further comprising glass fibre or other fibrous material reinforcement.

13. A product according to any of claims 10 to 12, which comprises voids which include trapped air.

14. A product according to any of claims 10 to 13, wherein the product is sandwiched between load supporting sheets adhered to the product.

15. A product according to any of claims 10 to 14 adhered onto the surface of an article.

16. A product according to any of claims 10 to 13 moulded onto the surface of an article.

17. A product according to any of claims 10 to 13 sprayed onto the surface of the article.

18. A product according to claim 16 or claim 17, wherein the article comprises a honeycomb structure.

19. A product according to claim 18, further comprising a phenolic glass laminate sandwiched between the honeycomb structure and the product.

20. A fire wall comprising a heat resistant product according to any of claims 10 to 19.

## Patentansprüche

1. Verfahren zur Herstellung eines hitzebeständigen Produkts, wobei das Verfahren umfaßt
(i) das Beschichten von Vermiculit-Granulat mit einem keramischen Bindemittel und das Aushärten/Trocknen des Bindemittels zur Ausbildung eines beschichteten Vermiculit-Granulats und
(ii) das Beschichten des vorbeschichteten Vermiculit-Granulats mit einem keramischen Bindemittel und das Aushärten/Trocknen des Bindemittels,
wobei zwischen 35% und 95% des Trockengewichts des Produkts Vermiculit mit einer solchen Teilchengröße ist, daß mehr als 60% des Vermiculits nicht durch ein 1-mm-Sieb hindurchgeht.

2. Verfahren nach Anspruch 1, bei dem das Aushärten/Trocknen das Erhitzen oder Vakuumtrocknen umfaßt.

3. Verfahren nach Anspruch 1 oder Anspruch 2, bei dem das Gemisch aus vorbeschichtetem Vermiculit-Granulat und Bindemittel während der Aushärtung/Trocknung im Schritt (ii) in einem Formwerkzeug oder einer Presse festgehalten wird.

4. Verfahren nach Anspruch 1 oder Anspruch 2, bei dem vor dem Aushärtungs/Trocknungs-Schritt eine Oberfläche eines Gegenstands mit dem Gemisch aus vorbeschichtetem Vermiculit-Granulat und Bindemittel beschichtet wird.

5. Verfahren nach einem der vorstehenden Ansprüche, bei dem 50% bis 90% des Trockengewichts des Produkts Vermiculit mit einer solchen Teilchengröße ist, daß mehr als 60% des Vermiculits nicht durch ein 1-mm-Sieb hindurchgeht.

6. Verfahren nach einem der vorstehenden Ansprüche, bei dem das Vermiculit eine solche Teilchengröße hat, daß mehr als 80% des Vermiculits nicht durch ein 2-mm-Sieb hindurchgeht.

7. Verfahren nach einem der vorstehenden Ansprüche, bei dem das Bindemittel die klebende Komponente eines 2-Komponenten-Bindemittels aufweist.

8. Verfahren nach einem der Ansprüche 1 bis 6, bei dem das Bindemittel die Klebekomponente eines 2-Komponenten-Bindemittels aufweist, vermischt mit pulverisiertem Vermiculit.

9. Verfahren nach einem der vorstehenden Ansprüche, bei dem das Vermiculit-Granulat eine maximale Abmessung von 15 mm hat.

10. Nach einem der vorstehenden Ansprüche hergestelltes hitzebeständiges Produkt.

11. Produkt nach Anspruch 10, das weitgehend starr ist.

12. Produkt nach Anspruch 10 oder Anspruch 11 mit einer Verstärkung aus Glasfasern oder einem anderen Fasermaterial.

13. Produkt nach einem der Ansprüche 10 bis 12, das Hohlräume aufweist, die Luft enthalten.

14. Produkt nach einem der Ansprüche 10 bis 13, das sandwichartig zwischen Lastaufnahmefolien, die am Produkt angeklebt sind, angeordnet ist.

15. Produkt nach einem der Ansprüche 10 bis 14, das auf die Oberfläche eines Gegenstands geklebt ist.

16. Produkt nach einem der Ansprüche 10 bis 13, das auf der Oberfläche eines Gegenstands angeformt ist.

17. Produkt nach einem der Ansprüche 10 bis 13, das auf die Oberfläche des Gegenstands gesprüht ist.

18. Produkt nach Anspruch 16 oder Anspruch 17, bei dem der Gegenstand eine Honigwaben-Struktur aufweist.

19. Produkt nach Anspruch 18, das ferner ein sandwichartig zwischen der Honigwaben-Struktur und dem Produkt angeordnetes Phenolglaslaminat aufweist.

20. Brandschott mit einem hitzebeständigen Produkt nach einem der Ansprüche 10 bis 19.

## Revendications

1. Procédé de fabrication d'un produit résistant à la chaleur, le procédé comprenant
(i) l'enduction de granulés de vermiculite avec un liant céramique, et le durcissement/séchage du liant afin de former des granulés de vermiculite pré-enduits; et
(ii) l'enduction des granulés de vermiculite pré-enduits avec un liant céramique, et le durcissement/séchage du liant,
dans lequel entre 35 % et 95 % du poids sec du produit est de la vermiculite ayant une taille de particule telle que plus de 60 % de la vermiculite ne passe pas à travers un crible de 1 mm.

2. Procédé selon la revendication 1, dans lequel les étapes de durcissement/séchage comportent le chauffage ou le séchage sous vide.

3. Procédé selon la revendication 1 ou la revendication 2, dans lequel le mélange de granulés de vermiculite pré-enduits et de liant est maintenu dans un moule ou une presse pendant le durcissement/séchage de l'étape (ii).

4. Procédé selon la revendication 1 ou la revendication 2, dans lequel le mélange de granulés de vermiculite pré-enduits et de liant est déposé sur une surface d'un article avant l'étape de durcissement/séchage.

5. Procédé selon l'une quelconque des revendications précédentes, dans lequel 50 % à 90 % du poids sec du produit est de la vermiculite ayant une taille de particule telle que plus de 60 % de la vermiculite ne passe pas à travers un crible de 1 mm.

6. Procédé selon l'une quelconque des revendications précédentes, dans lequel la vermiculite a une taille de particule telle que plus de 80 % de la vermiculite ne passe pas à travers un crible de 2%.

7. Procédé selon l'une quelconque des revendications précédentes, dans lequel le liant comprend la partie adhésive d'un liant en deux parties.

8. Procédé selon l'une quelconque des revendications 1 à 6, dans lequel le liant comporte la partie adhésive d'un liant en deux parties, mélangée avec de la vermiculite en poudre.

9. Procédé selon l'une quelconque des revendications précédentes, dans lequel les granulés de vermiculite ont une dimension maximum jusqu'à 15 mm.

10. Produit résistant à la chaleur pouvant être obtenu par un procédé selon l'une quelconque des revendications précédentes.

11. Produit selon la revendication 10, dans lequel le produit est sensiblement rigide.

12. Produit selon la revendication 10 ou la revendication 11, comportant en outre un renfort en fibre de verre ou une autre matière fibreuse.

13. Produit selon l'une quelconque des revendications 10 à 12, qui comprend des vides qui comprennent de l'air piégé.

14. Produit selon l'une quelconque des revendications 10 à 13, dans lequel le produit est enserré par des feuilles de support de charge collées sur le produit.

15. Produit selon l'une quelconque des revendications 10 à 14, collé sur la surface d'un article.

16. Produit selon l'une quelconque des revendications 10 à 13, moulé sur la surface d'un article.

17. Produit selon l'une quelconque des revendications 10 à 13, projeté sur la surface de l'article.

18. Produit selon la revendication 16 ou la revendication 17, dans lequel l'article comprend une structure en nid d'abeille.

19. Produit selon la revendication 18, comportant en outre un stratifié de verre phénolique enserré par la structure en nid d'abeille et le produit.

20. Paroi pare-feu comportant un produit résistant à la chaleur selon l'une quelconque des revendications 10 à 19.
